# EUROPÄISCHE PATENTSCHRIFT

(11) **EP 3 477 263 B1**
(45) Veröffentlichungstag und Bekanntmachung des Hinweises auf die Patenterteilung: **11.12.2019**
(21) Anmeldenummer: 17198463.6
(22) Anmeldetag: 26.10.2017
(51) Int. Cl.: G01D 5/347

(54) **ANORDNUNG MIT EINEM AN EINEM TRÄGER BEFESTIGTEN MASSSTAB**
ASSEMBLY WITH A GAUGE ATTACHED TO A CARRIER
DISPOSITIF DOTÉ D'UN MÈTRE FIXÉ SUR UN SUPPORT

(43) Veröffentlichungstag der Anmeldung: 01.05.2019
(73) Patentinhaber: Dr. Johannes Heidenhain GmbH, 83301 Traunreut (DE)
(72) Erfinder: ETTELT, Dirk, 83349 Palling (DE); LANG, Reiner, 84518 Garching (DE); PUCHER, Wolfgang, 83278 Traunstein (DE); SIGL, Thomas, 83071 Stephanskirchen (DE)

(56) Entgegenhaltungen:
- EP-A1- 1 621 847
- EP-A1- 3 023 742

## Beschreibung

### GEBIET DER TECHNIK

Zur Messung der Relativlage zweier Maschinenteile ist an einem der Maschinenteile ein Maßstab zu befestigen und am anderen der zueinander beweglichen Maschinenteile eine Abtasteinheit. Bei der Positionsmessung wird eine Messteilung des Maßstabs von der Abtasteinheit abgetastet und es werden positionsabhängige Abtastsignale generiert.

### STAND DER TECHNIK

Die EP 3 023 742 A1 offenbart eine Anordnung mit einer an einem Träger befestigten Maßverkörperung. Die Maßverkörperung ist über Abstandhalter am Träger abgestützt. Zwischen der Maßverkörperung und dem Träger ist eine Schicht angeordnet, welche die Maßverkörperung haftend am Träger hält, und die Abstandhalter sind beweglich in diese Schicht eingebettet.

In der US 2007/0281149 A1 ist eine Anordnung mit einem an einem Träger beabstandet angeordneten Maßstab beschrieben. Die Befestigung des Maßstabs am Träger erfolgt dabei mittels flächig verteilter und voneinander beabstandeter Klebepunkte.

Als Nachteil dieses Aufbaus wird in der US 2007/0281149 A1 selbst angeführt, dass durch Schrumpfen des Klebstoffes es zu örtlichen Verbiegungen des Maßstabs kommen kann, die zu Messfehlern bei der Positionsmessung mit diesem Maßstab führen.

### ZUSAMMENFASSUNG DER ERFINDUNG

Aufgabe der Erfindung ist es, eine Anordnung mit einem an einem Träger befestigten Maßstab anzugeben, wobei der Maßstab am Träger möglichst driftfrei gehalten wird, so dass mit diesem Maßstab eine Positionsmessung mit hoher Genauigkeit ermöglicht wird.

Gelöst wird diese Aufgabe durch die im Anspruch 1 angegebene Anordnung.

Vorteilhafte Ausbildungen der Erfindung sind in den abhängigen Ansprüchen angegeben.

Der Maßstab ist im Messbetrieb stabil am Träger befestigt, was eine hohe Steifigkeit in Messrichtung sowie senkrecht zur Messteilungsebene bedeutet.

Ausführungsbeispiele der Erfindung werden anhand der Zeichnungen näher erläutert.

### KURZE BESCHREIBUNG DER ZEICHNUNGEN

Es zeigen:
- Figur 1: einen schematischen Aufbau einer Positionsmesseinrichtung mit einem Träger und einem daran befestigten Maßstab im Schnitt;
- Figur 2: eine Ansicht II-II gemäß Figur 1, und
- Figur 3: die zweidimensionale Anordnung von Klebepunkten auf dem Träger.

### BESCHREIBUNG DER AUSFÜHRUNGSFORMEN

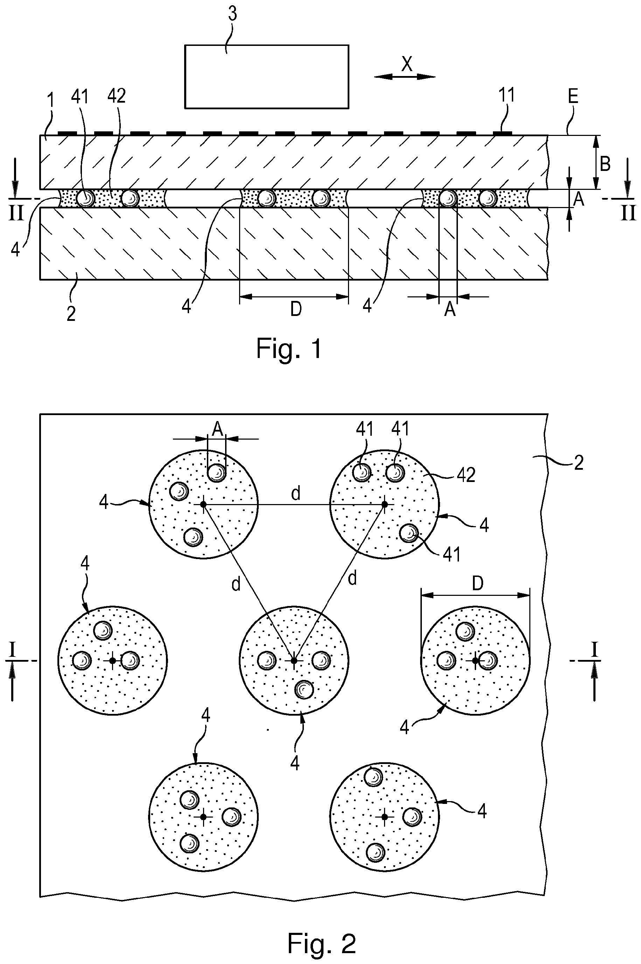

Anhand der Figuren 1 bis 3 wird ein Ausführungsbeispiel der Erfindung erläutert. Die dargestellte Positionsmesseinrichtung besteht aus einer Anordnung mit einem an einem Träger 2 befestigten Maßstab 1, der eine Messteilung 11 trägt. Die Messteilung 11 ist im Beispiel eine inkrementale Teilung, die bei der Positionsmessung in zumindest einer Messrichtungen X von einer Abtasteinheit 3 zur Erzeugung von positionsabhängigen Abtastsignalen lichtelektrisch abgetastet wird. Die Messteilung 11 kann ein Amplitudengitter oder ein Phasengitter sein, das in bekannter Weise zur hochgenauen interferentiellen Positionsmessung dient. Die Messteilung 11 kann auch zur zweidimensionalen Positionsmessung ausgebildet sein, indem diese in X-Richtung und in Y-Richtung eine Teilungsstruktur aufweist. Der Maßstab 1 ist zur Positionsmessung an dem Träger 2 mit einem Abstand A gehalten. Der Träger 2 besteht vorzugsweise aus einem Material, das den gleichen thermischen Ausdehnungskoeffizienten aufweist wie der Maßstab 1. Der mittlere thermische Ausdehnungskoeffizient α im Temperaturbereich von 0° bis 50° von Maßstab 1 und Träger 2 ist vorzugsweise kleiner als 0,1 x 10⁻⁶K⁻¹ bei Verwendung von Gläsern, Keramiken oder Glaskeramiken mit sogenannter Nullausdehnung, wie ZERODUR, SITAL und ULE, und kleiner als 1,5 x 10⁻⁶K⁻¹ bei Verwendung von Metallen, wie beispielsweise INVAR.

Die Befestigung des Maßstabs 1 an dem Träger 2 erfolgt über flächig verteilt und voneinander beabstandet angeordnete Klebepunkte 4.

Die Klebepunkte 4 bestehen jeweils aus einem Klebstoff 42, in dem zumindest drei Abstandhalter 41 eingeschlossen und flächig verteilt sind. Das bedeutet, dass die zumindest drei Abstandhalter 41 eines Klebepunktes 4 gesamtheitlich im Volumen des Klebstoffs 42 des Klebepunktes 4 eingeschlossen bzw. umschlossen sind.

Der Massenanteil der Abstandhalter 41 eines Klebepunktes 4 beträgt etwa 1 bis 10 %. Der Massenanteil gibt den relativen Anteil der Masse der Mischungskomponente Abstandhalter 41 an der Gesamtmasse des Klebepunktes 4 an, wobei die Gesamtmasse die Masse umfassend alle Abstandhalter 41 des Klebepunktes 4 plus des Klebstoffes 42 des jeweiligen Klebepunktes 4 ist.

Die Abstandhalter 41 weisen idealerweise exakt eine Höhe entsprechend dem geforderten Abstand A auf. Die Maßtoleranz der Abstandhalter 41 ist kleiner 10% dem Nennmaß, wobei das Nennmaß der gewünschte Abstand A ist.

Die Abstandhalter 41 können unterschiedlicher Art sein, es können im Träger 2 und / oder im Maßstab 1 ausgebildete erhabene Strukturen sein oder es können auf den Träger 2 oder auf den Maßstab 1 aufgebrachte Strukturen oder aufgebrachte Einzelelemente sein.

Sind die Abstandhalter 41 Einzelelemente, so ist es vorteilhaft, wenn diese bereits beim Aufbringen auf den Träger 2 oder auf den Maßstab 1 im Klebstoff 42 gebunden sind. Beim Zusammenfügen von Träger 2 und Maßstab 1 richten sich die Einzelelemente dann derart aus, dass im zusammengefügten Zustand von Träger 2 und Maßstab 1 die Einzelelemente einerseits am Träger 2 aufliegen und andererseits der Maßstab 1 auf den Einzelelementen aufliegt.

Die Einzelelemente sind vorzugsweise im Klebstoff 42 gebundene Kugeln oder Zylinder und das Material der Einzelelemente ist vorzugsweise Glas, Keramik oder Glaskeramik.

Bei dem nachfolgend im Detail beschriebenen Ausführungsbeispiel sind die Abstandhalter 41 Kugeln.

Jeder der Klebepunkte 4 umfasst zumindest drei Abstandhalter 41 in Form von Kugeln, die im Klebstoff 42 eingebettet und im Klebepunkt 4 flächig verteilt sind. Idealerweise enthält jeder der Klebepunkte 4 die gleiche Anzahl von Abstandhaltern 41. Der Maßstab 1 wird durch die kugelförmigen Abstandhalter 41 unterstützt, indem diese einerseits am Träger 2 aufliegen und andererseits der Maßstab 1 auf den Abstandhaltern 41 aufliegt. Die kugelförmigen Abstandhalter 41 kontaktieren einerseits den Maßstab 1 auf seiner Unterseite - also der Auflagefläche - jeweils punktförmig und andererseits kontaktieren sie den Träger 2 auf seiner dem Maßstab 1 gegenüberliegenden Oberseite ebenfalls punktförmig. Dadurch ist gewährleistet, dass die Ebenheit des Maßstabs 1 nicht durch andere Medien nachteilig beeinflusst wird. Der Klebstoff 42 hat den Zweck, die mehreren Abstandhalter 41 innerhalb des Volumens des jeweiligen Klebepunktes 4 ortsfest zu fixieren und die Haltekraft zwischen dem Träger 2 und dem Maßstab 1 zu generieren und aufrechtzuerhalten.

Die Abstandhalter 41 bestehen aus einem Material, das auftretenden Druckkräften möglichst ohne Verformung standhält. Ein geeignetes Material ist beispielsweise Glas, Keramik oder Glaskeramik. Bewährt hat sich beispielsweise Borosilikatglas. In vorteilhafter Weise bestehen die Abstandhalter 41 aus einem Material, das den gleichen oder zumindest den ähnlichen Ausdehnungskoeffizienten aufweist, wie der Maßstab 1.

Die Klebepunkte 4 sind mit einem gegenseitigen Mittenabstand d angeordnet, der kleiner als das Fünffache der Dicke B des Maßstabs 1 ist. Weiterhin ist von Vorteil, wenn der Durchmesser D der Klebepunkte 4 jeweils kleiner ist als die Dicke B des Maßstabs 1. Diese Bedingungen sind an jeder Stelle der zweidimensionalen Verteilung der Klebepunkte 4, zumindest aber innerhalb des Messbereichs, erfüllt. Der Messbereich ist definiert durch den Bereich der Messteilung 11, der für die hochgenaue Positionsmessung genutzt wird. Die Dicke B des Maßstabs 1 ist der Abstand zwischen der Messteilungsebene E, in der die Messteilung 11 liegt, und der Auflagefläche, mit der sich der Maßstab 1 auf den Abstandhaltern 41 abstützt.

Wie im Querschnitt der Figur 1 ersichtlich ist, ist es besonders vorteilhaft, wenn die zweidimensional verteilt angeordneten Klebepunkte 4 der den Messbereich definierenden Messteilung 11 des Maßstabs 1 direkt gegenüberliegend angeordnet sind.

Die zweidimensionale Anordnung der Klebepunkte 4 erfolgt in vorteilhafter Weise derart, dass zwischen diesen Freiräume entstehen, die miteinander in Verbindung stehen und somit nach außen führende Kanäle bilden. Hierzu sind die Klebepunkte 4 in einem gegenseitigen Mittenabstand d angeordnet, der größer ist als der Klebepunkt-Durchmesser D. Durch diese Maßnahme kann die Luft über die gesamte Fläche des Maßstabs 1 über die Kanäle homogen nach außen in die Umgebung abgegeben werden, was eine gute Ebenheit des Maßstabs 1 bei der Montage und auch während des Messbetriebs sicherstellt.

Die voneinander beabstandete Anordnung der Klebepunkte 4 hat weiterhin den Vorteil, dass für die Aushärtung und auch für die spätere Alterung des Klebstoffes 42 ausreichend Volumen zur Verfügung steht, ohne den Abstand A zwischen dem Träger 2 und dem Maßstab 1 zu beeinflussen.

Typische Werte für die Dicke B des Maßstabs 1 liegen bei 0,5 mm bis 15 mm.

Die kugelförmigen Abstandhalter 41 oder auch zylinderförmigen Abstandhalter haben einen Durchmesser entsprechend dem Abstand A zwischen dem Träger 2 und dem Maßstab 1. Typische Größen für den Abstand A und somit dem Durchmesser der Abstandhalter 41 liegen zwischen 5 µm und 250 µm.

Besonders vorteilhaft ist es, wenn die Klebepunkte 4 jeweils eine kreisförmige Außenkontur aufweisen und mit gleichen Durchmessern D ausgebildet sind. Der Durchmesser D der Klebepunkte 4 ist bevorzugt kleiner als die Dicke D des Maßstabs 1.

Typische Werte für den Durchmesser D der Klebepunkte 4 liegen im Bereich 1 mm bis 3 mm.

Ein typischer Wert für den Mittenabstand d der Klebepunkte 4 liegt im Bereich von 8 mm.

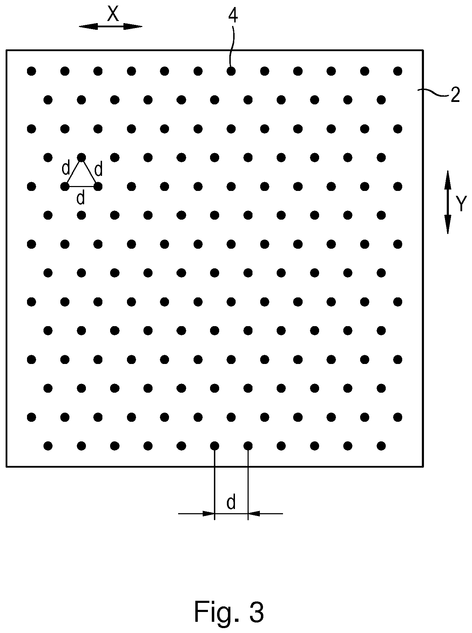

In den Figuren 2 und 3 ist eine besonders vorteilhafte Anordnung der Klebepunkte 4 dargestellt. Die Klebepunkte sind dabei in einem regelmäßigen Raster angeordnet, bei dem die gegenseitigen Mittenabstände d aller zueinander benachbarten Klebepunkte 4 gleich sind. Das heißt, dass die Mittenabstände d jeweils dreier zweidimensional nebeneinander angeordneter Klebepunkte 4 ein gleichseitiges Dreieck aufspannen, von denen eines in der Figur 2 und der Figur 3 eingezeichnet ist. Aus dieser zweidimensional symmetrischen Verteilung der Klebepunkte 4 resultiert auch eine symmetrische und somit besonders vorteilhafte Verteilung der mechanischen Spannungen. Die Außenkontur der Klebepunkte 4 ist dabei idealerweise eine Kreisform.

Dieses regelmäßige Raster bzw. Flächenmuster wird durch eine gleich beabstandete Aneinanderreihung der Klebepunkte 4 in mehreren Zeilen erreicht, wobei die Klebepunkte 4 der zweiten Zeile zweier aufeinanderfolgender Zeilen gegenüber den Klebepunkten 4 der ersten Zeile in Zeilenrichtung um den halben Mittenabstand d versetzt angeordnet sind.

Durch diese Maßnahme ergibt sich in einer Ebene, die parallel zur Ebene E der Messteilung 11 liegt, eine Verteilung der Klebepunkte 4 derart, dass die um einen Klebepunkt 4 angeordneten sechs nächstliegenden Klebepunkte 4 einerseits gleiche Mittenabstände d zum zentrisch liegenden Klebepunkt 4 aufweisen und andererseits die Verbindungen der Zentren dieser sechs Klebepunkte 4 ein gleichseitiges Sechseck bilden, bei dem alle sechs Seiten die Länge d aufweisen.

Das Verfahren zur Schaffung der Klebepunkte 4 umfasst folgende Verfahrensschritte:
1. Einmischen der Abstandhalter 41 - im Beispiel Einzelelemente, insbesondere in Form von Kugeln - in den Klebstoff 42, wobei die Einzelelemente in der Mischung möglichst homogen verteilt sein sollten.
2. Aufbringen eines regelmäßigen Musters von diskreten Klebetropfen, enthaltend den Klebstoff 42 und die eingemischten Einzelelemente, auf den Träger 2 oder den Maßstab 1. Um möglichst gleiche Eigenschaften für alle Klebepunkte 4 zu erreichen, ist darauf zu achten, dass die aufzubringende Menge der Mischung für alle Klebetropfen möglichst konstant ist.
3. Zusammenfügen von Träger 2 und Maßstab 1 bis die Einzelelemente durch den dabei entstehenden Flächendruck die Funktion von Abstandhaltern 41 erreichen. Dabei ergibt sich die Kreisform der Klebepunkte 4 und in Abhängigkeit der Menge des Klebstoffs 42 und des Durchmessers der Abstandhalter 41 auch der gewünschte Durchmesser D der Klebepunkte 4.
4. Aushärten des Klebstoffs 42, lichthärtend (UV-Licht) und / oder wärmehärtend .

Die Figur 3 zeigt beispielhaft die regelmäßige flächige Verteilung der Klebepunkte 4 auf dem gesamten Träger 2 mit der Annahme d = 8 mm und einer Abmessung des Trägers 2 von etwa 10 cm x 10 cm.

Anstelle oder zusätzlich zu der inkrementalen Messteilung 11 kann auch eine absolute Codierung auf dem Maßstab 1 vorgesehen sein.

Durch die erfindungsgemäße Maßnahme ist gewährleistet, dass alle Zug- und Druckspannungen, die durch die Befestigung des Maßstabs 1 eingebracht werden, sich in der Messteilungsebene E nicht als Längenfehler auswirken. Mit der erfindungsgemäß ausgestalteten Anordnung ist eine verformungsfreie Messteilungsebene E erreichbar, die eine präzise Positionsmessung ermöglicht. Durch die der Messteilung 11 direkt gegenüberliegende Unterstützung ist der Maßstab 1 im Messbetrieb stabil am Träger 2 befestigt, was eine hohe Steifigkeit in Messrichtung X sowie senkrecht zur Messteilungsebene E bedeutet.

## Patentansprüche

1. Anordnung mit einem an einem Träger (2) beabstandet angeordneten Maßstab (1), wobei der Maßstab (1) eine Messteilung (11) aufweist und über flächig verteilt und voneinander beabstandet angeordnete Klebepunkte (4) am Träger (2) befestigt ist,
**dadurch gekennzeichnet, dass**
die Klebepunkte (4) jeweils zumindest drei in Klebstoff (42) eingeschlossene Abstandhalter (41) umfassen, wobei die Klebepunkte (4) mit gleichen gegenseitigen Mittenabständen (d) angeordnet sind, derart, dass die Mittenabstände (d) jeweils dreier nebeneinander angeordneter Klebepunkte (4) ein gleichseitiges Dreieck aufspannen.

2. Anordnung nach einem der vorhergehenden Ansprüche, wobei der Massenanteil der Abstandhalter (41) eines Klebepunktes (4) 1 bis 10 % beträgt.

3. Anordnung nach einem der vorhergehenden Ansprüche, wobei die Klebepunkte (4) jeweils kreisförmig ausgebildet sind.

4. Anordnung nach Anspruch 3, wobei alle Klebepunkte (4) den gleichen Durchmesser (D) aufweisen und der Durchmesser (D) der Klebepunkte (4) kleiner als die Dicke (D) des Maßstabs (1) ist.

5. Anordnung nach Anspruch 3 oder 4, wobei der Durchmesser (D) der Klebepunkte (4) 1 mm bis 3 mm beträgt.

6. Anordnung nach einem der vorhergehenden Ansprüche, wobei die Klebepunkte (4) in einem gegenseitigen Mittenabstand (d) angeordnet sind, der kleiner ist als das Fünffache der Dicke (B) des Maßstabs (1).

7. Anordnung nach einem der vorhergehenden Ansprüche, wobei die Klebepunkte (4) der einen Messbereich definierenden Messteilung (11) des Maßstabs (1) gegenüberliegend angeordnet sind.

8. Anordnung nach einem der vorhergehenden Ansprüche, wobei die Klebepunkte (4) derart voneinander beabstandet angeordnet sind, dass diese gegenseitige Freiräume aufweisen, welche nach außen führende Kanäle bilden.

9. Anordnung nach einem der vorhergehenden Ansprüche, wobei die Materialien von Träger (2) und von Maßstab (1) den gleichen thermischen Ausdehnungskoeffizienten aufweisen.

10. Anordnung nach Anspruch 9, wobei der Ausdehnungskoeffizient des Trägers (2) und des Maßstabs (1) kleiner als 1,5 x 10⁻⁶K⁻¹ ist, vorzugsweise kleiner als 0,1 x 10⁻⁶K⁻¹ ist.

11. Anordnung nach einem der vorhergehenden Ansprüche, wobei die Abstandhalter (41) in Klebstoff (42) gebundene Einzelelemente sind und diese Einzelelemente einerseits am Träger (2) aufliegen und andererseits der Maßstab (1) auf den Einzelelementen aufliegt.

12. Anordnung nach einem der vorhergehenden Ansprüche, wobei das Material der Einzelelemente Glas, Keramik oder Glaskeramik ist.

13. Anordnung nach einem der Ansprüche 11 oder 12, wobei die Einzelelemente Kugeln sind.

## Claims

1. Arrangement having a scale (1) arranged spaced on a carrier (2), wherein the scale (1) has a measurement division (11) and is attached to the carrier (2) by way of adhesive points (4) which are arranged areally distributed and spaced apart from one another,
**characterized in that** the adhesive points (4) in each case comprise at least three spacers (41) enclosed in adhesive (42), wherein the adhesive points (4) are arranged with the same mutual centre distances (d) in such a manner that the centre distances (d) of each three adhesive points (4) arranged next to one another define an equilateral triangle.

2. Arrangement according to any one of the preceding claims, wherein the mass proportion of the spacers (41) of an adhesive point (4) amounts to 1 to 10%.

3. Arrangement according to any one of the preceding claims, wherein the adhesive points (4) are each formed circular.

4. Arrangement according to Claim 3, wherein all adhesive points (4) have the same diameter (D) and the diameter (D) of the adhesive points (4) is smaller than the thickness (B) of the scale (1),

5. Arrangement according to Claim 3 or 4, wherein the diameter (D) of the adhesive points (4) amounts to 1 mm to 3 mm.

6. Arrangement according to any one of the preceding claims, wherein the adhesive points (4) are arranged at a mutual centre distance (d) which is smaller than five times the thickness (B) of the scale (1).

7. Arrangement according to any one of the preceding claims, wherein the adhesive points (4) of the measurement division (11) of the scale (1) defining a measurement range are arranged located opposite.

8. Arrangement according to any one of the preceding claims, wherein the adhesive points (4) are arranged spaced from one another in such a manner that these have mutual free spaces which form channels leading to the outside.

9. Arrangement according to any one of the preceding claims, wherein the materials of carrier (2) and of scale (1) have the same thermal expansion coefficient.

10. Arrangement according to Claim 9, wherein the expansion coefficient of the carrier (2) and of the scale (1) are smaller than 1.5 x 10⁻⁶ K⁻¹, preferentially smaller than 0.1. x 10⁻⁶ K⁻¹.

11. Arrangement according to any one of the preceding claims, wherein the spacers (41) are individual elements bound in adhesive (42) and these individual elements on the one hand are supported on the carrier (2) and on the other hand the scale (1) is supported on the individual elements.

12. Arrangement according to any one of the preceding claims, wherein the material of the individual elements is glass, ceramic or glass ceramic.

13. Arrangement according to any one of Claims 11 or 12, wherein the individual elements are spheres.

## Revendications

1. Dispositif doté d'un mètre (1) disposé à distance sur un support (2), dans lequel le mètre (1) présente une graduation (11) et est fixé au support (2) par des points de colle (4) répartis en surface et espacés les uns des autres,
**caractérisé en ce que** les points de colle (4) comprennent respectivement au moins trois éléments d'écartement (41) inclus dans la colle (42), dans lequel les points de colle (4) sont disposés avec des distances des centres (d) mutuelles égales, de telle manière que les distances des centres (d) de trois points de colle (4) respectivement juxtaposés dessinent un triangle équilatéral.

2. Dispositif selon la revendication précédente, dans lequel la part massique des éléments d'écartement (41) d'un point de colle (4) vaut 1 à 10 %.

3. Dispositif selon l'une quelconque des revendications précédentes, dans lequel les points de colle (4) sont chacun de forme circulaire.

4. Dispositif selon la revendication 3, dans lequel tous les points de colle (4) présentent le même diamètre (D) et le diamètre (D) des points de colle (4) est inférieur à l'épaisseur (B) du mètre (1).

5. Dispositif selon une revendication 3 ou 4, dans lequel le diamètre (D) des points de colle (4) vaut 1 mm à 3 mm.

6. Dispositif selon l'une quelconque des revendications précédentes, dans lequel les points de colle (4) sont disposés avec une distance mutuelle (d) des centres, qui est inférieure au quintuple de l'épaisseur (B) du mètre (1).

7. Dispositif selon l'une quelconque des revendications précédentes, dans lequel les points de colle (4) d'une graduation (11) du mètre (1) définissant une zone de mesure sont disposés l'un en face de l'autre.

8. Dispositif selon l'une quelconque des revendications précédentes, dans lequel les points de colle (4) sont disposés à distance l'un de l'autre, de telle manière qu'ils forment des espaces libres mutuels, qui forment des canaux conduisant vers l'extérieur.

9. Dispositif selon l'une quelconque des revendications précédentes, dans lequel les matériaux du support (2) et du mètre (1) présentent le même coefficient de dilatation thermique.

10. Dispositif selon la revendication 9, dans lequel le coefficient de dilatation du support (2) et du mètre (1) est inférieur à 1,5 x 10⁻⁶ K⁻¹, de préférence inférieur à 0,1 x 10⁻⁶ K⁻¹.

11. Dispositif selon l'une quelconque des revendications précédentes, dans lequel les éléments d'écartement (41) sont des éléments individuels liés dans la colle (42) et d'une part ces éléments individuels reposent sur le support (2) et d'autre part le mètre (1) repose sur les éléments individuels.

12. Dispositif selon l'une quelconque des revendications précédentes, dans lequel le matériau des éléments individuels est le verre, la céramique ou la vitrocéramique.

13. Dispositif selon une des revendications 11 ou 12, dans lequel les éléments individuels sont des billes.
